# FASCICULE DE BREVET EUROPEEN

(11) **EP 2 907 853 B1**
(45) Date de publication et mention de la délivrance du brevet: **07.10.2020**
(21) Numéro de dépôt: 15154952.4
(22) Date de dépôt: 13.02.2015
(51) Int. Cl.: C08L 95/00, E01C 7/35, E01C 7/18

(54) **Matériau bitumineux coulé à froid paraffinique à montée en cohésion rapide**
Kaltgegossenes paraffinhaltiges bituminöses Material mit schnellem Kohäsionsaufbau
Paraffinic cold-cast bituminous material with rapid cohesion increase

(30) Priorité: 13.02.2014 FR 1451144
(43) Date de publication de la demande: 19.08.2015
(73) Titulaire: Eurovia, 92500 Rueil-Malmaison (FR)
(72) Inventeur: Delfosse, Frédéric, 33600 PESSAC (FR); Drouadaine, Ivan, 33160 SAINT MEDARD EN JALLES (FR)
(74) Mandataire: Regimbeau

(56) Documents cités:
- WO-A1-2009/144544
- Anonymous: "Basic Asphalt Emulsion manual; MS-19; 4th Edition" In: "Basic Asphalt Emulsion manual; MS-19; 4th Edition", 1 février 2008 (2008-02-01), Asphalt Institute, Lexington, Kentucky;USA, XP055100940, ISBN: 978-1-93-415456-4 page i-iii,v-xi,1-3,5-12, * le document en entier *
- Anonymous: "Bitumen Emulsions, Chapter 6" In: "Bitumen Emulsions, Chapter 6", 1 janvier 2003 (2003-01-01), Thomas Telford, London, UK, XP055145368, ISBN: 0 7277 3220 X pages 91-117, * le document en entier *
- GUERRERO-BARBA FELIPE II ET AL: "Interfacial energy of heavy naphthenic bitumen in aqueous medium", FUEL, vol. 112, 2013, pages 45-49, XP028672361, ISSN: 0016-2361, DOI: 10.1016/J.FUEL.2013.04.086
- RODRIGUEZ-VALVERDE ET AL: "Imaging techniques applied to characterize bitumen and bituminous emulsions", ADVANCES IN COLLOID AND INTERFACE SCIENCE, ELSEVIER, NL, vol. 136, no. 1-2, 13 décembre 2007 (2007-12-13), pages 93-108, XP022388947, ISSN: 0001-8686
- Bernard Eckmann ET AL: "Technical Challenges (Bituminous Emulsions)", Pavement Preservation & Recycling Summit (PPRS, Paris), 22 February 2015 (2015-02-22), pages 1-23, XP055586356, Paris, France Retrieved from the Internet: URL:https://www.h-a-d.hr/pubfile.php?id=87 9 [retrieved on 2019-05-07]
- LAURENCE BOULANGÉ ET AL: "Study of Interfacial Interactions between Bitumen and Various Aggregates Used in Road Construction", JOURNAL OF ADHESION SCIENCE AND TECHNOLOGY, vol. 26, no. 1-3, 1 January 2012 (2012-01-01), pages 163-173, XP055586985, GB ISSN: 0169-4243, DOI: 10.1163/016942411X569372

## Description

La présente invention concerne des matériaux bitumineux coulés à froid, à base de bitume non naphténique, tel que du bitume paraffinique, ayant des propriétés de montée en cohésion satisfaisantes.

Les matériaux bitumineux coulés à froid, encore appelés enrobés coulés à froid, sont des « enrobés hydrocarbonés réalisé à partir de granulats, d'un liant hydrocarboné et éventuellement de dopes et/ ou d'additifs, dont les caractéristiques permettent un enrobage sans séchage et chauffage des granulats », définition de la norme NF P 98-149 (Terminologie des enrobés hydrocarbonées).

Cette technique, dite technique "à froid", présente au niveau environnemental l'avantage important, de ne pas produire d'émissions de fumées, ce qui diminue les nuisances des travailleurs et des riverains. Elle présente aussi une grande souplesse d'emploi, du fait des basses températures requises pour leur application, en particulier dans des endroits où il n'est pas possible d'avoir un dispositif de chauffage. Elle permet aussi de limiter le chauffage lors de l'application du bitume à des températures élevées et sont de ce fait peu consommatrices en énergie.

Les matériaux bitumineux coulés à froid sont constitués d'un mélange de granulats, d'émulsion de bitume (modifié ou non), de fibres, d'additifs minéraux (ciment...) et organiques (dope). Ce mélange est fabriqué et mis en œuvre par une machine automotrice spécialement conçue et adaptée.

Après sa mise en œuvre et rupture de l'émulsion, ce revêtement coulé à froid en très faible épaisseur (généralement de 6 à 13 mm d'épaisseur par couche) doit atteindre sa consistance définitive (montée en cohésion) très rapidement.

Les deux paramètres essentiels gouvernant la formulation, la fabrication et la mise en œuvre des matériaux bitumineux coulés à froid sont :
- la maniabilité du mélange granulats/émulsion : optimisation des proportions des différents constituants (eau, additifs, formulation de l'émulsion) pour obtenir un délai de mise en œuvre suffisant et ainsi permettre le mélange des granulats avec l'émulsion dans le malaxeur ;
- la cinétique de "montée en cohésion" : le matériau bitumineux coulé à froid, après l'application sur la chaussée, doit acquérir une montée en cohésion le plus rapidement possible pour l'ouverture au trafic. Pour des températures de mûrissement allant de 7 à 40°C, un délai de 30 minutes est considéré comme pertinent pour l'homme de l'art pour répondre aux cahiers des charges les plus stricts.

Les gouttelettes de bitume initialement séparées confèrent au système un caractère fluide et une mise en place aisée à l'aide des machines spécifiques pour les matériaux bitumineux coulés à froid. Le système est alors visqueux. Le temps caractéristique pendant lequel cet état perdure est appelé temps de maniabilité (tm).

Dans un second temps, les gouttelettes de bitume coalescent et forment un gel. Lorsque toutes les gouttelettes de bitume sont regroupées, on considère que l'émulsion a rompu (temps de rupture : tr). Le système est alors viscoélastique. Le système tend par la suite à se contracter de façon à réduire la surface de contact entre l'eau et le bitume (temps de cohésion tc). Ce processus suit une cinétique qui dépendra des répulsions électrostatiques entre gouttelettes et donc de la nature du bitume et de l'émulsifiant.

La cinétique de la réaction de coalescence entre les gouttelettes de bitume conditionnera la rapidité de la montée en cohésion du matériau bitumineux coulé à froid qui pourra se traduire par une sensibilité ou non du matériau aux conditions de mûrissement au jeune âge.

Pour répondre aux cahiers des charges les plus strictes : remise sous trafic rapide, travail en arrière-saison (temps pluvieux, zones d'ombres, température d'application froide mais supérieure à 5°C ...) on utilise des bitumes spécifiques : les bitumes naphténiques. Ces bitumes présentent de nombreuses spécificités : acidité naturelle (3 à 5 mg KOH/g de bitume), présence de dinaphtène, traces de Ni et Vd, et provient principalement du Venezuela. Pour différencier ses approvisionnements et compte tenu de leur coût, les matériaux bitumineux coulés à froid sont réalisés dans de nombreux pays avec des bitumes « traditionnels » qui ne permettent toutefois pas de répondre au critère de montée en cohésion attendu. Ainsi, les temps d'attente avant remise sous trafic sont longs, souvent supérieurs à une heure. Ces bitumes sont dénommés : bitumes paraffiniques.

L'emploi d'un seul type de bitume pour une application donnée n'est pas souhaité, pour des raisons à la fois techniques, logistiques et économiques. Il serait donc intéressant de pouvoir utiliser n'importe quel type de bitume, pour formuler des matériaux bitumineux coulés à froid, ayant les propriétés désirées en terme de maniabilité (ou temps de malaxage sans rupture) tout en conservant des propriétés avantageuses en montée en cohésion (temps de réouverture au trafic) et ainsi pouvoir également travailler dans des conditions de température et d'hygrométrie variées.

Il serait en particulier intéressant de pouvoir remplacer le bitume naphténique par tout type de bitume tel que le bitume paraffinique, qui est plus largement disponible et donc moins cher. Cependant, contrairement au bitume naphténique, le bitume paraffinique entraîne des différences importantes au niveau de la cohésion du matériau ce qui exige de retarder la remise sous trafic (temps de remise sous trafic souvent supérieur à 1h après application).

Pour améliorer la montée en cohésion des matériaux bitumineux coulés à froid pour un bitume paraffinique, on a proposé l'ajout au bitume de dopes d'acides gras. Toutefois, ces ajouts n'ont pas permis une remise sous trafic rapide (inférieure à 30 minutes) en raison d'une montée en cohésion trop lente du matériau. Plus récemment, la demande WO2009/144544 propose l'utilisation d'acides gras polymérisés. Toutefois, les valeurs de cohésion obtenues à 30 min sont significativement inférieures à 2 N.m (ou 20 kg.cm) ce qui signifie que la remise sous trafic ne peut pas se faire dans la demi-heure. Or sur certains chantiers, notamment en zone urbanisée, il est important de pouvoir ouvrir la route à la circulation plus rapidement.

Dans ces circonstances, le but de la présente invention est de proposer un matériau bitumineux coulé à froid, à base de bitume non naphténique, en particulier un bitume paraffinique ou un liant de synthèse, ayant une montée en cohésion et un durcissement suffisamment rapides afin de permettre une remise sous trafic rapide, en particulier en moins d'une heure, plus avantageusement en moins de 30 minutes.

Un autre but de l'invention est de proposer un matériau bitumineux coulé à froid, à base de bitume non naphténique, en particulier un bitume paraffinique ou un liant de synthèse, pouvant être malaxé sans rupture pendant quelques dizaines de secondes, de préférence pendant au moins 30 secondes, avantageusement au moins 40 s, plus avantageusement au moins 90 secondes.

Un autre objectif de l'invention est de proposer un matériau bitumineux coulé à froid, à base de bitume non naphténique, en particulier un bitume paraffinique ou un liant de synthèse, ayant une bonne tenue mécanique. Le matériau une fois mis sous circulation, doit notamment résister aux agressions engendrées par les pneumatiques des véhicules.

Le matériau bitumineux coulé à froid selon l'invention peut avantageusement être mise en œuvre également en arrière-saison : temps pluvieux, zones d'ombres, température d'application froide mais supérieure à 5°C.

Au sens de la présente invention, un bitume non naphténique est un bitume ayant naturellement un indice d'acide inférieur à 2 mg KOH/g de bitume, avantageusement inférieur à 1 mg KOH/g de bitume. L'indice d'acide d'un tel bitume peut être nul. Par « bitume ayant naturellement » on désigne le bitume avant toute éventuelle additivation, telle que l'ajout de dopes qui viendrait ultérieurement modifier l'indice d'acide.

L'indice d'acide est le nombre de milligrammes d'hydroxyde de potassium nécessaires pour la neutralisation des acides libres contenus dans un gramme de bitume. Il peut être mesuré par les protocoles décrit dans la norme ASTM D664-11a ou la norme NF T 66-066.

Le bitume non naphténique est un bitume paraffinique ou un liant de synthèse ayant naturellement un indice d'acide nul.

On entend par «bitume paraffinique » un bitume qui n'est pas un bitume naphténique. Un bitume paraffinique contient des paraffines, avantageusement en des teneurs mesurées par DSC allant de 0,5 à 4,5% en poids, par rapport au poids du bitume. Un bitume paraffinique a naturellement un indice d'acide inférieur à 2 mg KOH/g de bitume, avantageusement inférieur à 1 mg KOH/g de bitume.

Afin de décrire au mieux les différentes familles constituants le liant de synthèse nous pouvons citer les brevets suivants : FR 1 316 712, GB 1 226 234, EP 0 179 510, EP 0 330 281 et US 5 021 476. Des exemples de liants de synthèse sont aussi les liants Kromatis® de Total.

Quatre critères sont considérés comme critiques pour la réussite d'un matériau bitumineux coulé à froid :
- Le temps de maniabilité, encore appelé temps de fluidité ou de consolidation : temps déterminé comme la durée entre (1) le début de mélange de la fraction minérale solide et de l'émulsion de bitume et (2) la prise du matériau bitumineux coulé à froid.
- Le temps de rupture, encore appelé temps de prise : temps pour lequel l'émulsion dans le matériau bitumineux coulé à froid est totalement rompue.
- Le temps de cohésion : temps pour lequel on considère que la cohésion du matériau bitumineux coulé à froid est suffisante pour l'ouverture au trafic.
- La résistance à l'usure (ou à l'abrasion). Essai effectué après un mûrissement plus ou moins long pour s'assurer après la remise sous trafic de la durabilité du matériau bitumineux coulé à froid. En particulier, on veut éviter un gravillonnage.

### Temps de maniabilité

Afin d'évaluer le temps de maniabilité d'un matériau bitumineux coulé à froid, pour assurer une mise en œuvre par la machine d'application, on effectue en laboratoire des essais dans un récipient sur des gâchées de 400 g à 1000 g de matériaux secs. Après mélange des constituants, on apprécie le changement d'état du matériau bitumineux coulé à froid (passage de l'état liquide à pâteux) en agitant manuellement à l'aide d'une spatule à vitesse constante. Le changement d'état observé donne le temps de prise.

Cet essai est réalisé à une température contrôlée (classiquement entre 20 et 25 °C). Les exigences sont un temps de prise supérieur à 30 s, avantageusement supérieur à 40s, plus avantageusement supérieur à 90 s, encore plus avantageusement compris entre 90 et 180 s, encore plus avantageusement compris entre 90 et 120 s.

### Temps de rupture

A l'aide de l'appareil de cohésion (NF EN 12274-4), un papier buvard, soumis à une pression de 0,2 MPa, est appliqué à la surface d'une galette du matériau bitumineux coulé à froid pour déterminer le temps à partir duquel le papier n'est plus tâché par l'émulsion. Ce temps définit le temps de rupture de l'émulsion.

Dans le cadre de la présente l'invention, le temps de rupture est avantageusement inférieur à 20 min.

### Tests de cohésion / résistance à l'usure

### Essai de cohésion Benedict

Le temps de cohésion peut être déterminé à partir de l'essai normalisé NF EN 12274-4 avec un cohésivimètre Bénédict. Le formulateur enregistre en fonction du temps de mûrissement la cohésion du matériau bitumineux coulé à froid.

Cet essai permet de juger de la vitesse de mûrissement d'un matériau bitumineux coulé à froid en suivant l'évolution de la prise de cohésion dans le temps, par des mesures effectuées à 5, 10, 15, 20, 30 et 60 minutes. On définit ainsi le temps (temps de consolidation) au bout duquel le couple mesuré est supérieur à 20 kg.cm. Ce temps permet de fixer un délai minimum de remise de la chaussée sous trafic sans risque pour le revêtement.

Pour optimiser le temps d'ouverture au trafic, on cherche à obtenir une valeur de couple seuil (dépendant des conditions de travail propres aux entreprises) le plus vite possible.

Dans le cadre de la présente invention, la valeur de couple seuil est de 20 kg.cm, dans des conditions de température ambiante, variant de 18°C à 25°C.

En fonction de l'origine du bitume, le temps nécessaire pour obtenir ce seuil de cohésion peut varier de 10 minutes à près d'une heure, voire deux heures. L'objectif de l'invention est de réduire ce temps à moins d'une heure, avantageusement moins de 30 min avec un bitume non naphténique, tel qu'un bitume paraffinique.

On peut compléter la valeur obtenue par une observation de l'état de l'éprouvette à la fin du test :
- D pour "destruction": L'échantillon est détruit
- F pour "Fissuré": L'échantillon est fissuré
- N pour "Normal": L'échantillon est légèrement endommagé (quelques pertes de granulats)
- S pour "Solide": Seul le film de bitume est parti de l'échantillon.

### Essai de fracture

Cet essai a été développé pour évaluer la résistance à la traction et à la rupture par torsion des matériaux bitumineux coulés à froid. Des éprouvettes de matériau bitumineux coulé à froid de dimension 120*120*10 mm sont fabriquées après avoir vérifié le temps de prise. Après un temps 30 minutes à 18°C-20°C, 55 % d'hygrométrie, le matériau bitumineux coulé à froid est démoulé et positionné sur l'appareil avec un contrepoids placé sur sa partie fixe (en général, la moitié de l'enrobé est placé dans le vide). On mesure alors le temps nécessaire à la cassure de l'enrobé après ouverture de la trappe. Le résultat est donné en secondes et représente le temps de fracture. Plus le temps est élevé plus le matériau bitumineux coulé à froid est résistant en flexion et donc plus la montée en cohésion est avancée.

On considère que la montée en cohésion est bonne si dans les conditions standards de conservation (30 min à 18°C-20°C, 55 % d'hygrométrie) le temps au bout duquel intervient la fracture est supérieur à 10 s, avantageusement supérieur à 15 s. En fonction de la fraction granulaire, on peut obtenir des temps de fracture de l'ordre de 50 s ou 70 s.

Selon l'invention, cet essai est réalisé avec un bitume paraffinique. On peut réaliser un essai de référence avec un bitume naphténique (même fraction granulaire, composition émulsifiante adaptée au bitume napthénique). Dans l'invention, on recherche un temps de fracture au moins aussi long que l'essai de référence.

### Modification de l'essai normalisé de résistance à l'usure WTAT (Wet track abrasion test)

L'essai NF EN 12274-5 (4.3.2) peut être utilisé comme décrit dans la norme et dans ce cas on évalue la cohésion d'un matériau bitumineux coulé à froid après un mûrissement favorable (au moins 15 h à 60°C).

Cependant, cet essai normalisé seul n'est pas représentatif de la mise en œuvre sur chantier ; les conditions de mûrissement étant trop favorables. Afin de se rapprocher des problèmes de cinétique de montée en cohésion au jeune âge, un autre essai a été développé.

Cet essai consiste à réaliser l'essai d'usure tel que décrit dans la norme NF EN 12274-5 après des conditions de mûrissement plus sévères pour qualifier les performances mécaniques du matériau bitumineux coulé à froid lors de sa mise sous trafic.

Par formule, deux essais sont réalisés, après une heure de mûrissement à température ambiante :
- 18 h à 55 % d'hygrométrie et 18°C : conditions de mûrissement favorables, simulation d'un mûrissement par temps sec,
- 18 h à 100 % d'hygrométrie et 18°C: conditions de mûrissement défavorables, simulation d'un mûrissement par temps humides.

Après ces mûrissements, les éprouvettes sont immergées 1 heure dans l'eau avant d'être abrasées sous eau pendant 5 minutes à température ambiante.

Cet essai a pour but d'évaluer l'influence des conditions de mûrissement (température, hygrométrie) sur les propriétés mécaniques au jeune âge d'un ECF. Cet essai peut être réalisé à trois températures (10, 18 ou 30°C) et à deux hygrométries (55 % et 100 %) différentes. On spécifie un pourcentage de perte de masse (par rapport à la zone abrasée) en fonction des conditions de mûrissement :
- < 5 % de perte si l'hygrométrie est de 55 %, à 18°C
- < 25 % de perte si l'hygrométrie est de 100 %, à 18°C.

L'invention a pour premier objet un matériau bitumineux coulé à froid, obtenu par mélange d'une fraction minérale solide avec une émulsion cationique de bitume, de type liant dans l'eau, le bitume étant un bitume paraffinique ou un liant de synthèse ayant un indice d'acide nul avant toute additivation, caractérisé en ce qu'il présente une bonne montée en cohésion selon les spécifications suivantes :
- Une valeur de cohésion torsion, mesurée selon l'essai cohésion Bénédict décrit ci-dessus, supérieure ou égale à 20 kg/cm à 30 min. Avantageusement, lorsque l'on observe de l'état de l'éprouvette à la fin du test de cohésion Benedict, celle-ci est soit normale soit solide.
- Un temps de fracture, mesuré selon la méthode décrite ci-dessus, au moins aussi long que celui obtenu avec un bitume naphténique.
- une perte de masse, mesurée selon l'essai WTAT décrit ci-dessus après un temps de mûrissement de 18 h à 18°C et un degré d'hygrométrie de 55 %, inférieure à 5 %.
- une perte de masse, mesurée selon l'essai WTAT décrit ci-dessus après un temps de mûrissement de 18 h à 18°C et un degré d'hygrométrie de 100 %, inférieure à 25 %.

Le matériau bitumineux coulé à froid présente avantageusement un temps de fracture de l'éprouvette supérieur à 10 s, plus avantageusement supérieur à 15 s, encore plus avantageusement supérieur à 20 s, encore plus avantageusement supérieur à 30 s.

Toutefois, en fonction de la fraction granulaire, la montée en cohésion peut être suffisante alors même que le temps de fracture de l'éprouvette est inférieur à ces valeurs. Avec un bitume naphténique, pour ces fractions granulaires, le temps de fracture de l'éprouvette est aussi inférieur à ces valeurs.

L'invention permet d'obtenir, avec un bitume paraffinique ou de synthèse ayant un indice d'acide nul avant toute éventuelle additivation, des temps de fracture de l'éprouvette similaires supérieurs ou égaux à ceux qui seraient obtenus avec un bitume naphténique. Dans ce comparatif « bitume naphténique », on utilise la même fraction minérale et le même additif minéral. Par contre, on utilise une composition émulsifiante adaptée à ce bitume. Par même fraction minérale on désigne en particulier des fractions minérales qui ont la même pétrographie.

Le matériau bitumineux coulé à froid présente avantageusement en outre les spécifications suivantes :
- un temps maniabilité supérieur ou égale à 30s, avantageusement supérieur ou égale à 40s, plus avantageusement supérieur ou égale à 90 s, encore plus avantageusement compris entre 90 s et 120 s,
- un temps de rupture inférieur ou égal à 20 min.

En chantier, avec ce matériau bitumineux coulé à froid on n'observe pas de gravillonnage après remise sous trafic rapide, c'est-à-dire de l'ordre de la demi-heure. Ce matériau bitumineux coulé à froid peut être appliqué dans des conditions ambiantes pour une température variant avantageusement de 5 à 40°C, plus avantageusement de 10°C à 40°C, avec un degré d'hygrométrie pouvant aller jusqu'à 100 %.

Ce matériau bitumineux coulé à froid présente de bonnes propriétés mécaniques, compatibles avec les utilisations souhaitées, en particulier qualité d'enrobage, solidité de l'enrobage (pas de désenrobage), résistance à l'abrasion (tests WTAT).

Ces très bonnes propriétés peuvent être obtenues en utilisant conjointement avec le bitume ayant naturellement un indice d'acide inférieur à 2 mg KOH/g de bitume (encore appelé bitume non naphténique), une composition émulsifiante particulière, un dope d'acide gras et un additif minéral.

L'invention a en particulier pour objet un matériau bitumineux coulé à froid, obtenu par mélange d'une fraction minérale solide avec une émulsion cationique de bitume, de type liant dans l'eau, caractérisé en ce que ladite émulsion cationique de bitume est obtenue par mélange d'une formule comprenant, en poids par rapport au poids total de l'émulsion :
- de 50 % à 70 % d'un liant bitumineux naturel paraffinique ou de synthèse, ce liant est dopé par un acide gras, avantageusement en une quantité allant de 0,3 à 1,5 % en poids de dope d'acide gras par rapport au poids total du liant ;
- de 30 à 50 % d'une phase aqueuse contenant :
   i.de 0,4 % à 2 %, en poids par rapport au poids total de l'émulsion, d'une composition émulsifiante comprenant au moins une alkylpropylènepolyamine, le groupe alkyle étant un reste hydrocarboné, saturé ou insaturé, comprenant de 8 à 24 atomes de carbone et/ou ses dérivés immédiats de cyclisation ainsi que ses dérivés oxyéthylés ou oxypropylés,
   ii.d'une quantité suffisante pour ajuster le pH de la phase aqueuse à une valeur comprise entre 1,5 et 5,5, avantageusement entre 2 et 3,5 d'un acide phosphorique ou polyphosphorique,
   iii. et d'eau pour complément de la formule à 100 %,
   et en ce que on ajoute à la fraction minérale solide un additif minéral.

Pour des conditions moins strictes de remise sous trafic avec des temps d'attente plus longs et/ou en fonction du granulat et/ou de la variabilité du bitume, on peut envisager d'utiliser un liant bitumineux non dopé en jouant sur le ratio entre (alkylpropylènepolyamine (1) + éventuellement amine grasse (3)) et / amidopolyamine (2) (interaction de la remontée du pH liée à l'additif minéral et aux granulats et du pKa de la composition émulsifiante).

L'émulsion a avantageusement un pH compris entre 1,5 et 5,5, plus avantageusement entre 2 et 3,5.

Le liant bitumineux naturel paraffinique ou de synthèse a, par définition, un indice d'acide compris entre 0 et 2 mg KOH/g de bitume, avantageusement inférieur à 1 mg KOH/g de bitume. L'indice d'acide d'un tel liant peut être nul.

On entend par "liant" tout liant hydrocarboné d'origine fossile ou de synthèse utilisable pour la réalisation d'enrobés, notamment du bitume pur ou modifié par ajout de polymère(s). En particulier, le liant est un liant paraffinique.

Le liant pourra être un liant mou à dur, avantageusement d'un grade allant de 160/220 à 10/20.

Avantageusement, le liant est un liant ayant une pénétrabilité mesurée selon la norme EN1426 comprise entre 50 et 220, plus avantageusement entre 70 et 100.

Le liant peut comprendre des additifs couramment utilisés dans le domaine routiers, tels que des polymères (éthylène-acétate de vinyle EVA, styrène-butadiène-styrène SBS, styrène-butadiène SB) réticulés ou non, des poudrettes de caoutchouc, des cires végétales ou d'origine pétrochimique, des dopes d'adhésion.

Le liant comprend avantageusement un dope d'acide gras. En effet, lorsqu'il est acceptable d'attendre plus longtemps avant remise sous trafic, il est possible de s'exempter de la présence d'un dope d'acide.

Le dope d'acide gras peut être tout acide gras et dérivés, en particulier des diacides gras, triacides gras, dimère d'acides gras ou trimère d'acides gras, adapté à une utilisation dans un matériau bitumineux.
Par « acide gras » on entend un acide mono-, di- ou tricarboxylique à chaîne aliphatique, saturée ou insaturée, contenant 10 à 28 atomes de carbone, avantageusement 12 à 20 atomes de carbone.
Les acides gras peuvent être d'origines fossiles, animales, végétales ou de synthèse. Ils peuvent avoir subi une fonctionnalisation chimique. Par origine animale on entend par exemple le suif. Par origine végétale on entend les huiles végétales, celles-ci sont avantageusement choisies parme les huiles de tournesol, de soja, de colza, de lin, de coprah, d'arachide, d'olive, de maïs, de ricin, leurs dérivés ainsi que leurs mélanges. Ces matières grasses peuvent également provenir d'huiles usagées de l'industrie (agroalimentaire, papeterie,...).
Par « dérivés d'acides gras », on entend par exemple les acides gras polymérisés ou des diacide ou triacide d'acides gras. Les acides gras polymérisés comprennent des monomères d'acides gras, des dimères d'acides gras et des trimères d'acides gras. Par diacide ou triacide d'acides gras, on entend tout acide gras fonctionnalisé par une nouvelle fonction acide carboxylique sur au moins une des insaturations de sa chaîne hydrocarbonée, ladite fonction ayant réagi avec une autre fonction acide carboxylique d'un autre acide gras ou, respectivement, diacide gras.
La masse moléculaire des dérivés d'acides gras sera comprise préférentiellement entre 500 et 1000 g/mol.
Avantageusement, le dope d'acide gras a un indice d'acide supérieur à 100, plus avantageusement supérieur à 150, encore plus avantageusement supérieur à 180.
L'indice d'acide représente la quantité d'acide libre et est le nombre de milligrammes de potasse nécessaire pour neutraliser l'acidité de 1 gramme de produit, déterminé par potentiométrie.
Les acides gras peuvent être fonctionnalisés chimiquement et ainsi porter au moins une fonction chimique choisie parmi les fonctions alcool, ester, époxy, péroxyde, acide carboxylique et aldéhyde, avantageusement une fonction acide carboxylique. Les acides gras comprennent avantageusement au moins une double liaison carbone-carbone conjuguée, et/ou ayant subi le greffage de molécules d'anhydride maléïque sur une double liaison carbone-carbone conjuguées (conduisant à la formation de fonctions diacides carboxyliques sur la chaîne hydrocarbonée). Cette fonctionnalisation permet l'obtention de diacides ou de triacides reliant les acides gras par des ponts oxygène formés sur leurs chaînes hydrocarbonées.

De préférence, l'acide gras est choisi dans le groupe constitué de l'acide oléique, de l'acide linoléique, de l'acide linolénique, et leurs mélanges.
On peut citer de manière non limitative:
- les acides gras oléïques, tel le RADIACID® 208 disponible auprès de la société OLEON;
- les acides gras de tournesol, de coprah (RADIACID® 600), de colza D (RADIACID® 166), de soja (RADIACID® 110 et RADIACID® 121), de palme, de palmiste ou dérivés d'huile de pin (tall oil en langue anglaise), d'huile de ricin;
- les acides gras de suif, comme les RADIACID® 401 et RADIACID® 403;
- les acides gras de suif hydrogéné comme les RADIACID® 408 et RADIACID® 409. Ces acides gras peuvent aussi être sous la forme de dimères ou trimères, tels que le RADIACID® 0951.

Le dope d'acide gras peut être ajouté au liant bitumineux en mélange avec les polymères ajoutés au liant ou en ligne.

La teneur en dope d'acide gras varie avantageusement de 0,5 % à 2 % en poids, par rapport au poids du liant, plus avantageusement de 0,5 à 1 % en poids.

Dans l'émulsion, la teneur en liant varie avantageusement de 50 à 75 % en poids de liant, par rapport au poids total de l'émulsion, plus avantageusement de 55 à 70 % en poids, encore plus avantageusement de 60 à 65 % en poids.

L'émulsion pourra contenir du latex synthétique ou naturel. Par latex on entend une dispersion de polymères (SBS, SB) réticulés ou non en phase aqueuse. Ce latex est incorporé dans la phase aqueuse avant émulsification ou en ligne pendant la fabrication de l'émulsion soit encore après fabrication de l'émulsion.

L'émulsion de bitume est une dispersion du liant dans l'eau, phase continue du système. Elle comprend une composition émulsifiante.

La teneur en composition émulsifiante varie avantageusement de 0,4 à 2 % en poids, par rapport au poids total de l'émulsion, plus avantageusement de 0,5 à 1,2 % en poids. La teneur en composition émulsifiante varie avantageusement de 4 à 20 kg par tonne d'émulsion, plus avantageusement de 5 à 12 kg par tonne d'émulsion.

Ces quantités sont données pour une température d'utilisation de 20°C. Lorsque la température est plus élevée, la teneur en composition émulsifiante peut être augmentée (par exemple de 9 à 15 kg par tonne d'émulsion). Lorsque la température est plus faible, la teneur en composition émulsifiante peut être réduite (par exemple de 9 à 7 kg par tonne d'émulsion).

La composition émulsifiante comprend au moins une alkylpropylènepolyamine, le groupe alkyle étant un reste hydrocarboné, saturé ou insaturé, comprenant de 8 à 24 atomes de carbone, plus avantageusement 12 à 22 atomes de carbone, et/ou ses dérivés immédiats de cyclisation ainsi que ses dérivés oxyéthylés ou oxypropylés.

L'alkylpropylènepolyamine répond avantageusement à la formule (I) suivante :

R-(NR₄-R₃)ₓ-NR₁R₂

dans laquelle
x est un entier allant de 1 à 4. Avantageusement x vaut 1.
R représente un radical hydrocarboné comprenant de 8 à 24 atomes de carbone, plus avantageusement 12 à 22 atomes de carbone, saturé ou insaturé, linéaire ou ramifié, éventuellement cyclisé. Ce radical dérive avantageusement d'acides gras de suif.
R₃ représente un radical hydrocarboné comprenant de 1 à 6 atomes de carbone, saturé ou insaturé, linéaire ou ramifié. Avantageusement R₃ représente un radical éthylène ou propylène.
R₄ représente un atome d'hydrogène, un radical hydrocarboné comprenant de 1 à 6 atomes de carbone, saturé ou insaturé, linéaire ou ramifié, ou un radical (CH₂-CR₅HO)_{z}H dans lequel R₅ est un atome d'hydrogène ou un radical méthyle, z vaut 1 ou 2. Avantageusement R₄ représente un radical méthyle ou éthyle.
R₁ et R₂ représentent, chacun, indépendamment l'un de l'autre, un atome d'hydrogène, un radical hydrocarboné comprenant de 1 à 6 atomes de carbone, saturé ou insaturé, linéaire ou ramifié ou un radical (CH₂-CR₅HO)_{z}H dans lequel R₅ est un atome d'hydrogène ou un radical méthyle, z vaut 1 ou 2. Avantageusement R₁ représente un radical méthyle ou éthyle. Avantageusement R₂ représente un radical méthyle ou éthyle.
L'alkylpropylènepolyamine est de préférence la suif trimèthylpropylène diamine, par exemple de n° CAS 68783-25-5.

La composition émulsifiante comprend avantageusement en outre (3) une amine grasse. Cette amine grasse répond avantageusement à la formule (III) R-NR₁R₂ ; R, R₁ et R₂ étant tels que définis précédemment. Cette amine grasse est avantageusement la suif diméthylamine, par exemple de n°CAS 68814-69-7.

Le système émulsifiant alkylpropylènepolyamine (1) seule ou mélange alkylpropylènepolyamine (1) / amine grasse (3) a un effet tampon vis-à-vis de l'ajout d'acide avant rupture brutale de la courbe de pH.

Cet effet tampon peut être vérifié suivant le protocole suivant : préparer une solution de titration est préparée par mélange de 0,200 g du système émulsifiant dans 150 mL d'eau déminéralisée ou distillée et préparer une solution titrante d'acide chlorhydrique à 0,1 mol/L ; ajouter millilitre par millilitre la solution titrante à la solution de titration et mesurer à chaque ajout le pH.

Lorsqu'on réalise le dosage pH-métrique de ce système émulsifiant, alkylpropylènepolyamine (1) seule ou mélange alkylpropylènepolyamine (1) / amine grasse (3), on constate, après l'ajout des premiers millilitres de l'acide tout d'abord un plateau dénotant une quasi-stabilité du pH malgré l'ajout d'acide (effet tampon) puis une rupture brutale de la courbe de pH. En particulier, suite à l'ajout des premiers millilitres d'acide (2-3 ml) le pH descend légèrement par rapport au pH initial (entre moins 0,3 et moins 1) puis le pH reste stable (diminution inférieure à 1 unité, avantageusement inférieure à 0,8 unité, plus avantageusement inférieure à 0,5 unité) pendant l'ajout d'au moins 5 millilitres d'acide, avantageusement au moins 8 millilitres d'acide, avant rupture brutale de la courbe de pH (perte de plus de 2 unités de pH pendant l'ajout de moins de 5 millilitres d'acide, avantageusement moins de 3 millilitres d'acide).

Selon une variante préférée de l'invention, le système émulsifiant, alkylpropylènepolyamine (1) seule ou mélange alkylpropylènepolyamine (1) / amine grasse (3), mis en solution dans de l'eau déminéralisée ou distillée (solution de titration : 0,200 g du système émulsifiant dans 150 mL d'eau déminéralisée ou distillée), a un pH inférieur à 8, avantageusement compris entre 6 et 8.

Le pKa de ce système émulsifiant, alkylpropylènepolyamine (1) seule ou mélange alkylpropylènepolyamine (1) / amine grasse (3), est avantageusement compris entre 6 et 7.

La composition émulsifiante comprend avantageusement de 30 à 100 % en poids, avantageusement 30 à 70 % en poids, par rapport au poids total de la composition émulsifiante, de l'alkylpropylènepolyamine (1) et éventuellement de l'aminé grasse (3). La teneur en alkylpropylènepolyamine (1), et éventuellement en amine grasse (3), dans la composition émulsifiante, varie plus avantageusement de 40 à 100 % en poids, encore plus avantageusement de 50 à 100 % en poids, encore plus avantageusement de 50 à 70 % en poids, par rapport au poids total de la composition émulsifiante. Dans une variante, la teneur en alkylpropylènepolyamine (1), et éventuellement en amine grasse (3) dans la composition émulsifiante, est de de 60 % en poids (± 3 %), par rapport au poids total de la composition émulsifiante. Dans une autre variante, la teneur en alkylpropylènepolyamine (1), et éventuellement en amine grasse (3) dans la composition émulsifiante, est de 100 % en poids (± 3 %), par rapport au poids total de la composition émulsifiante.

Le mélange alkylpropylènepolyamine (1) / amine grasse (3) comprend avantageusement au moins 90 % en poids d'alkylpropylènepolyamine (1), par rapport au poids total du mélange.

La composition émulsifiante comprend avantageusement :
(1) au moins une alkylpropylènepolyamine, le groupe alkyle étant un reste hydrocarboné, saturé ou insaturé, comprenant de 8 à 24 atomes de carbone, plus avantageusement 12 à 22 atomes de carbone, et/ou ses dérivés immédiats de cyclisation ainsi que ses dérivés oxyéthylés ou oxypropylés et
(2) au moins un amidopolyamine de formule R'CO-(NH-R")ₐ-NH₂, R' étant un reste hydrocarboné, saturé ou insaturé, linéaire ou ramifié, comprenant de 12 à 24 atomes de carbone, R" un radical éthylène, a un entier allant de 2 à 5 et/ou ses dérivés immédiats de cyclisation ;
(3) éventuellement une amine grasse telle que définie précédemment.

L'amidopolyamine répond à la formule (II) suivante

R'CO-(NH-R")ₐ-NH₂,

Dans laquelle
R' est un reste hydrocarboné, saturé ou insaturé, linaire ou ramifié comprenant de 12 à 24 atomes de carbone, avantageusement 16 à 24 atomes de carbone. Ce radical dérive avantageusement d'acides gras de tall oil (huile de tall) ou de suif,
R" est un radical éthylène,
a représente un entier allant de 2 à 5, de préférence a vaut 5,
et/ou ses dérivés immédiat de cyclisation, en particulier les dérivés imidazoline.

L'amidopolyamine est avantageusement le ou les produits de réaction d'un acide gras tel que le Tall Oil ou la suif avec la diéthanolamine, et/ou diéthylènetriamine, et/ou la tétraéthylènpentamine et/ou la triéthylènetétramine. Avantageusement, l'amidopolyamine est le ou les produits de réaction du Tall Oil avec la tétraéthylènpentamine, en particulier la tall oil imidazoline triéthylènetriamine ; par exemple de n° CAS 68555-22-6. Avantageusement, l'amidopolyamine est le ou les produits de réaction du Tall Oil avec la diéthylènetriamine, la tétraéthylènpentamine et la triéthylènetétramine, en particulier le produit de n° CAS 68990-49-8. Le Tall Oil (ou huile de tall) est un sous-produit de l'industrie papetière, en particulier un sous-produit de la production de la pâte à papier selon le procédé Kraft ou au sulfate. Le Tall Oil est un mélange complexe comprenant trois familles majoritaires de composés : des acides résiniques, des acides gras et des produits neutres insaponifiables. En général, le Tall Oil (ou Tall Oil brut) comprend de 40 à 60 % en masse d'acides résiniques, de 30 à 50 % en masse d'acides gras et de 5 à 10 % de produits neutres insaponifiables. Le Tall Oil brut peut être raffiné par distillation fractionnée sous-vide et conduit à différentes coupes de distillation plus ou moins riches en acides gras, acides résiniques et produits neutres insaponifiables. Les principales coupes de distillation, sont par exemple, une coupe riche en acides gras appelée Tall Oil Fatty Acid (ou TOFA), une coupe riche en acides résiniques appelée résine de Tall Oil (ou Tall Oil Rosin ou TOR) et une coupe (ou le résidu) restant au fond de la colonne de distillation, comprenant à la fois des acides gras, des acides résiniques et des composés neutres insaponifiables appelée brai de Tall Oil (ou poix de Tall Oil ou TOP).

Selon l'invention, on préfère les acides gras du tall oil. De préférence, les acides gras du dérivé de Tall Oil sont choisis parmi les acides palmitiques, les acides stéariques, les acides oléiques, les acides linoléiques, les acides linoléniques, pris seuls ou en mélange. De préférence, les acides gras sont choisis parmi les acides oléiques et les acides linoléiques, pris seuls ou en mélange.

Selon une variante préférée de l'invention, l'amidopolyamine (2), mise en solution dans de l'eau déminéralisée ou distillée, a un pH compris entre 8 et 10, avantageusement compris entre 9 et 10. Le pKa de l'amidopolyamine (2) est avantageusement compris entre 7 et 8. Lorsqu'on réalise le dosage pH-métrique d'une amidopolyamine (2) selon l'invention, on constate une déprotonation lente régulière, c'est-à-dire sans plateau et sans rupture brutale de la courbe de pH.

La solution de titration est préparée par mélange de 0,200 g du système émulsifiant dans 150 mL d'eau déminéralisée ou distillée. La solution titrante est une solution aqueuse d'acide chlorhydrique à mol/L,

La composition émulsifiante comprend avantageusement de 30 à 70 % en poids, par rapport au poids total de la composition émulsifiante, de l'amidopolyamine (2). La teneur en amidopolyamine (2), dans la composition émulsifiante, varie plus avantageusement de 30 à 60 % en poids, encore plus avantageusement de 30 à 50 % en poids, par rapport au poids total de la composition émulsifiante. La teneur en amidopolyamine (2) dans la composition émulsifiante, est de préférence de 40 % en poids (± 3 %), par rapport au poids total de la composition émulsifiante.

Selon une variante préférée de l'invention, la composition émulsifiante comprend plus de 90 % en poids, avantageusement plus de 95 % en poids, encore plus avantageusement plus de 99 % en poids, par rapport au poids total de la composition émulsifiante, de l'alkylpropylènepolyamine (1), éventuellement de l'amidopolyamine (2) et éventuellement de l'aminé grasse (3).

Selon une variante préférée de l'invention, la composition émulsifiante ne comprend significativement pas d'ammonium quaternaire. La teneur en ammonium quaternaire est avantageusement inférieure à 1 % en poids, par rapport au poids total de la composition émulsifiante, plus avantageusement nulle.

La composition émulsifiante comprend également une quantité suffisante d'un acide minéral ou organique différent d'un acide gras (par exemple : acide citrique, acide acétique), avantageusement un acide minéral. L'acide permet d'ioniser les fonctions amines des émulsifiants pour permettre leur dissolution dans l'eau.

La teneur en acide est ajustée à la teneur en émulsifiant (en fonction de la nature des granulats, de la température d'application...) pour avoir un pH de la phase aqueuse compris entre 1,5 et 5,5, avantageusement entre 1,8 et 3,5, plus avantageusement entre 2 et 3.

Tout acide ne peut pas être utilisé. Il convient en effet d'utiliser un acide qui soit compatible avec l'additif minéral ajouté aux fractions minérales et la composition émulsifiante qui requiert une remontée de pH qui ne soit pas trop brutale.

Avec la composition émulsifiante selon l'invention, on utilise un acide qui tamponne le mélange émulsion/fraction minérale solide pendant un temps suffisant pour avoir une maniabilité satisfaisante. Pour déterminer quel acide permettra de tamponner le mélange, on peut mesurer en laboratoire la remontée de pH en présence des composants impactant la remontée de pH : fines, additif minéral, ajoutés en des proportions proportionnelles aux proportions qui seront utilisées en chantier. On cherche à contrôler la cinétique de remontée de pH de telle sorte que, avantageusement, au bout de 20 minutes le pH soit toujours inférieur à 10.

Les conditions de test pouvant être utilisées sont par exemple les suivantes : pour 20 g de fines (éléments inférieurs à 0,063 mm) et 18 g eau déminéralisée ajouter une solution comprenant (a) 11 g d'eau et acidifiée à un pH de 2 (avec l'acide testé) et (b) g d'additif minéral. Mesurer le pH de la solution toutes les 10 minutes.

L'acide est avantageusement l'acide phosphorique ou un acide polyphophorique.

L'acide polyphosphorique est un oligomère d'acide phosphorique comprenant des molécules selon l'une ou l'autre des formules structurelles.

PₙO₃ₙ₊₁⁽ⁿ⁺²⁾⁻ dans laquelle n est un nombre entier supérieur à 1, avantageusement 1, 2 ou 3, ou

P₂O₅·x(O²⁻), dans laquelle x est compris entre 0 et 1.

L'émulsion ainsi décrite est mélangée avec une fraction minérale solide pour conduire à matériau bitumineux coulé à froid.

Par "fractions solides minérales", on entend ici toutes fractions solides utilisables pour la réalisation de matériaux bitumineux coulés à froid notamment pour la construction routière, tels que par exemple définis dans la norme NF EN 13043. Les fractions solides utilisables pour la réalisation de matériaux bitumineux coulés à froid comprennent notamment les granulats minéraux naturels (gravillons, sable, fines) issus de carrière ou de gravière, les produits de recyclage tel que les agrégats d'enrobés résultant du recyclage des matériaux récupérés lors de la réfection des routes ainsi que des surplus de centrales d'enrobage, les rebuts de fabrication, les granulats provenant du recyclage de matériaux routiers y compris les bétons, les laitiers en particulier les scories, les schistes en particulier la bauxite ou le corindon, les poudrettes de caoutchouc provenant du recyclage des pneus notamment, ainsi que leurs mélanges en toutes proportions.

Les granulats minéraux naturels comprennent :
- des éléments inférieurs à 0,063 mm (filler ou fines) ;
- du sable dont les éléments sont compris entre 0,063 mm et 2 mm ;
- des gravillons, dont les éléments ont des dimensions
   ∘ comprises entre 2 mm et 6 mm ;
   ∘ supérieures à 6 mm.

La taille des granulats minéraux est mesurée par les essais décrits dans la norme NF EN 933-1.

On entend par « agrégats d'enrobés » des enrobés (mélange de granulats et de liants bitumineux) provenant de fraisage de couches d'enrobé, de concassage de plaques extraites de chaussées en enrobées, de morceaux de plaques d'enrobés, de déchets d'enrobé ou de surplus de productions d'enrobés (les surplus de productions sont des matériaux enrobés ou partiellement enrobés en centrale résultant des phases transitoires de fabrication) (norme NF EN13108). Ces éléments et les autres produits de recyclage seront concassés et/ou tamisés pour ne pas excéder un diamètre de 10mm.

On désigne également les « fractions solides minérales » par les termes « fraction minérale 0/D ».

Cette fraction minérale 0/D peut être séparée en deux granulométries : la fraction minérale 0/d et la fraction minérale d/D.

Les éléments les plus fins (la fraction minérale 0/d) seront ceux compris dans la plage comprise entre 0 et un diamètre maximal que l'on peut fixer entre 2 et 6 mm (de 0/2 à 0/6), avantageusement entre 2 et 4 mm. Les autres éléments (diamètre minimal supérieur à 2, 3, 4, 5 ou 6 mm ; et environ jusqu'à 10 mm) constituent la fraction minérale d/D.

Généralement on utilise des granulométries 0/4, 0/6, 0/6 discontinu, 0/8, 0/8 discontinu ou 0/10 recomposées, avec éventuellement humidification pour éviter la ségrégation lors du transport. La fraction minérale solide comprend avantageusement de 6 à 10 % en poids de fines, par rapport au poids total de la fraction minérale.

La fraction minérale solide constitue avantageusement 80 à 90 %, plus avantageusement 85 à 95 %, du poids du matériau bitumineux coulé à froid.

On ajoute à la fraction minérale solide un additif minéral pour réguler la cinétique de remontée de pH lors du mélange et assurer le temps de maniabilité et assurer ensuite la qualité de rupture de l'émulsion et améliorer les propriétés d'adhésivité. Cet additif est en règle générale du ciment, de la chaux éteinte ou du lait de chaux calcique.

Selon l'invention, on utilise du ciment. Le ciment peut être tout ciment utilisable en application routière.

On entend par « ciment » tout liant hydraulique composé de matière inorganique finement moulue qui, gâchée avec de l'eau, forme une pâte qui fait prise et durcit par suite de réactions et processus d'hydratation et qui après durcissement, conserve sa résistance et sa stabilité même sous l'eau (normes NF P98-149 et NF P 15-301).

La teneur en additif minéral varie avantageusement de 0,25 à 1 ppc, en poids par rapport au poids de la fraction solide minérale sec.

On peut également ajouter à la fraction minérale solide des fibres, avantageusement des fibres organiques et en particulier les polyacrylonitriles, telles que les fibres en polyacrylonitrile de taille comprise entre 4 et 12 mm. La teneur en fibre varie avantageusement de 0,05 à 0,5 ppc (partie pour cent en poids)/ granulats secs, préférentiellement entre 0,07 et 0,2 ppc.

Dans le matériau bitumineux, la teneur en liant résiduel est avantageusement comprise entre 5 et 12 %, plus avantageusement de 6 et 10 % par rapport au poids des granulats secs.

Ces matériaux bitumineux coulés à froid sont particulièrement adaptés pour la fabrication de couches de roulement, à faible ou fort trafic, en travaux neufs comme en entretien, de couche d'accrochage ou de couche de roulement provisoire.

En tant que techniques d'entretien, les matériaux bitumineux coulés à froid apportent aux chaussées imperméabilité et adhérence. Compte tenu de leur faible épaisseur, ils ne permettent pas de compenser des faiblesses de structure. Leur domaine d'emploi de prédilection est l'entretien préventif et curatif.

La modulation de la granulométrie, la possibilité d'employer des liants modifiés, l'application en monocouche ou en bicouche permettent d'adopter la technique aux trafics et aux supports.

Les domaines d'emploi plus spécifiques concernent de manière non limitative les applications suivantes :
1. Les enrobés coulés à froid haute performance pour autoroutes (trafic jusqu'à T0).
2. Les enrobés coulés à froid pour le traitement des zones accidentogènes.
3. Les enrobés coulés à froid pour complexes retardateurs de remontée de fissures (attention, l'effet anti fissure sera limité du fait de leur épaisseur).
4. Les revêtements composés du type Capeseal (Enduit+ Enrobé Coulé à Froid).
5. Les enrobés coulés à froid pour couche d'accrochage.
6. Les enrobés coulés à froid colorés.
7. L'entretien des chaussées aéronautiques, taxiways, zones de stationnement des avions privés...
8. Le colmatage des enrobés drainants.

L'invention a également pour objet un procédé de préparation d'un matériau bitumineux coulé à froid ayant des propriétés de montée en cohésion améliorées, comprenant :
a. La préparation d'une fraction minérale solide.
b. L'ajout, à la fraction minérale solide de l'étape a), d'un additif minéral.
c. Le cas échéant, l'ajout à la fraction minérale solide de l'étape b), d'eau d'apport et/ou d'un additif retardateur de prise.
d. L'ajout de l'émulsion de bitume telle que décrite précédemment à la fraction minérale solide de l'étape b) ou c).

A la fraction minérale solide, on ajoute (étape b), un additif minéral tel que décrit ci-dessus. On peut également ajouter des fibres, tel que décrit ci-dessus.

En fonction des conditions climatiques, de l'état de sècheresse de la fraction minérale solide, l'opérateur peut ajouter à la fraction minérale solide de l'eau d'apport.

En règle générale la teneur en poids totale en eau de la fraction minérale solide, constituée de l'eau d'apport et de l'eau naturellement présente dans la fraction minérale solide, est de 10 %. Elle peut varier de 6 à 14 % voire plus. Les pourcentages sont exprimés en poids par rapport au poids total de la fraction minérale solide.

L'opérateur peut ajouter également un dope (solution diluée d'un émulsifiant dans de l'eau), qui servira principalement de retardateur de prise. Ces émulsifiants peuvent être des amines grasses mais aussi des ammoniums quaternaires.

En particulier, l'amélioration de la montée en cohésion dudit matériau bitumineux coulé à froid consiste à obtenir les spécifications suivantes :
- Une valeur de cohésion torsion, mesurée selon l'essai cohésion Bénédict décrit ci-dessus, supérieure ou égale à 20 kg/cm à 30 min. Avantageusement, lorsque l'on observe de l'état de l'éprouvette à la fin du test de cohésion Benedict, celle-ci est soit normale soit solide.
- Un temps de fracture, mesuré selon la méthode décrite ci-dessus, au moins aussi bon que celui obtenu avec un bitume naphténique.
- une perte de masse, mesurée selon l'essai WTAT décrit ci-dessus après un temps de mûrissement de 18 h à 18°C et un degré d'hygrométrie de 55 %, inférieure à 5 %.
- une perte de masse, mesurée selon l'essai WTAT décrit ci-dessus après un temps de mûrissement de 18 h à 18°C et un degré d'hygrométrie de 100 %, inférieure à 25 %.

Ces spécifications ne sont pas obtenues au détriment des temps de maniabilité, de rupture ni au détriment des propriétés mécaniques.

L'invention a également pour objet un procédé de fabrication de couche de roulement ou couche d'accrochage comprenant
- la préparation d'un matériau bitumineux coulé à froid selon l'invention ; puis
- l'épandage du matériau bitumineux à une température ambiante variant de 5°C à 40°C et à un degré d'hygrométrie pouvant aller jusqu'à 100 %.

L'enrobé pourra être compact pour des conditions difficiles de mise en œuvre (zones ombragées, température supérieure à 5°C).

Selon ce procédé la remise sous trafic se fait avantageusement dans l'heure, plus avantageusement dans la demi-heure, après l'épandage/compactage.

L'invention a également pour objet l'utilisation combinée dans un matériau bitumineux coulé à froid préparé à partir d'un liant bitumineux paraffinique ou un liant de synthèse ayant un indice d'acide nul avant toute éventuelle additivation (a) d'une composition émulsifiante telle que décrite précédemment, (b) d'un dope d'acide gras ajouté au liant bitumineux non naphténique tel que décrit précédemment, et d'additif minéral ajouté à la fraction minérale solide tel que décrit précédemment, pour améliorer la montée en cohésion dudit matériau bitumineux coulé à froid.

En particulier, l'amélioration de la montée en cohésion dudit matériau bitumineux coulé à froid consiste à obtenir les spécifications suivantes :
- Une valeur de cohésion torsion, mesurée selon l'essai cohésion Bénédict décrit ci-dessus, supérieure ou égale à 20 kg/cm à 30 min. Avantageusement, lorsque l'on observe de l'état de l'éprouvette à la fin du test de cohésion Benedict, celle-ci est soit normale soit solide.
- Un temps de fracture, mesuré selon la méthode décrite ci-dessus, au moins aussi bon que celui obtenu avec un bitume naphténique.
- une perte de masse, mesurée selon l'essai WTAT décrit ci-dessus après un temps de mûrissement de 18 h à 18°C et un degré d'hygrométrie de 55 %, inférieure à 5 %.
- une perte de masse, mesurée selon l'essai WTAT décrit ci-dessus après un temps de mûrissement de 18 h à 18°C et un degré d'hygrométrie de 100 %, inférieure à 25 %.

Ces spécifications ne sont pas obtenues au détriment des temps de maniabilité, de rupture ni au détriment des propriétés mécaniques.

Les exemples qui suivent illustrent l'invention mais ne sont pas limitatifs.

### Exemple 1 : Formulations et propriétés mécaniques

Les émulsions suivantes ont été formulées, soit avec un bitume naphténique (noté N) 70/100 (F1 - essai comparatif) soit avec un bitume paraffinique (noté P).

Le bitume paraffinique utilisé dans les formules F2 à F6 est un bitume 70/100 (fournisseur Total) additivé à 0,6 % en poids de radiacid® 121 (acides gras de soja).

Les formules F2 à F3 (exemples comparatifs) comprennent des émulsifiants différents de la composition émulsifiante selon l'invention.

La formule F4 (exemple comparatif) est acidifiée à l'acide chlorhydrique. La formule F6 (exemple comparatif) ne comprend pas d'alkylpropylènepolyamine.

La formule F5 correspond à une formule selon l'invention

Les formules sont reportées dans le tableau suivant dans lequel les teneurs sont toutes exprimées en kg/t d'émulsion :

**Tableau 1**

| | | F1 | F2 | F3 | F4 | F5 | F6 |
|---|---|---|---|---|---|---|---|
| Bitume | Nature | N | P | P | P | P | P |
| | teneur | 600 | 600 | 600 | 600 | 600 | 600 |
| | Phase aqueuse | | | | | | |
| Emulsifiant 1 | Nature | Stabiram ® MS 3 | Stabiram ® MS 3 | Polyram ® S | Redicote ® 404 | Redicote ® 404 | Redicote ® 404 |
| | Fournisseur | CECA | CECA | CECA | Akzo Nobel | Akzo Nobel | Akzo Nobel |
| | Teneur | 5 | 5 | 5 | 3 | 3 | 7 |
| Emulsifiant 2 | Nature | Polyram ® L 80 | Polyram ® L 80 | Polyram ® L 920 | Duomee n ®TTM | Duomee n® TTM | - |
| | Fournisseur | CECA | CECA | CECA | AKZO | AKZO | - |
| | Teneur | 2 | 2 | 2 | 4 | 4 | - |
| Acide | Nature | HCl | HCl | HCl | HCl | H3PO4 | H3PO4 |
| | Teneur | 1,8 | 1,8 | 10 | | 9 | 11 |
| Eau | teneur | 391,2 | 391,2 | 383 | | 384 | 382 |

| | | | | | | | |
|---|---|---|---|---|---|---|---|
| Stabiram® MS 3 :solution de dichlorure de N-alkyl « suif » N-diméthyl amino propyl N-triméthyl ammonium dans un mélange eau/glycol Polyram® L80 : propylène polyamine de suif propoxylée Polyram® S : alkylpolyamines (> 80 % en poids), alkyldiamines (< 10 % en poids), alkylamines (< 5 % en poids) Polyram® L920 : polyamine (imidazoline) (CAS 68910-93-0) | | | | | | | |

Ces émulsions sont ensuite mélangées avec des granulats (Microdiorite de la carrière Ambazac) et formulées tel que reporté dans le tableau suivant, dans lequel les teneurs sont toutes exprimées en ppc/granulats secs :

**Tableau 2**

| Référence Emulsion | F1 | F2 | F3 | F4 | F5 | F6 |
|---|---|---|---|---|---|---|
| FORMULES | | | | | | |
| Teneur en eau | 10 | 10 | 10 | 10 | 10 | 10 |
| Fibres | 0,07 | 0,07 | 0,07 | 0,07 | 0,07 | 0,07 |
| Emulsion | 11,3 | 11,3 | 11,3 | 11,3 | 11,3 | 11,3 |
| Ciment CEM II 32.5 | 0,5 | 0,5 | 0,5 | 0,5 | 0,5 | 0,5 |

| PROPRIETES | | | | | | |
|---|---|---|---|---|---|---|
| tm (s) | 90 | 90 | 90 | trop réactif | 120 | 200 |
| tr(min) | 5 | 15 | 10 | - | 5 | 7 |
| tf(s) | 70 | 10 | 8 | - | 88 | 5 |

| | | | | | | |
|---|---|---|---|---|---|---|
| tm = temps de malaxage ; tr = temps de rupture ; tf = temps de fracture éprouvette | | | | | | |

Dans le tableau précédent, la teneur en eau correspond à la teneur en eau des granulats + la teneur en eau d'apport. Les fibres sont des fibres de polyacrylonitrile de taille comprise entre 4 et 12 mm.

On constate qu'avec un bitume naphténique (émulsion F1), on obtient un matériau bitumineux coulé à froid qui présente des temps de malaxage et de rupture adéquats et une montée en cohésion rapide (le temps de fracture est long). Au contraire, avec un bitume paraffinique (émulsion F2) la montée en cohésion est mauvaise.
Cette montée en cohésion n'est pas améliorée avec des tensioactifs autres que ceux de l'invention, en particulier des ammoniums quaternaires. Par ailleurs, le choix de l'acide est critique car avec l'acide chlorhydrique (F4) le temps de malaxage n'est pas suffisant pour obtenir un matériau bitumineux coulable à froid.

### Exemple 2 : dosage pH-métrique

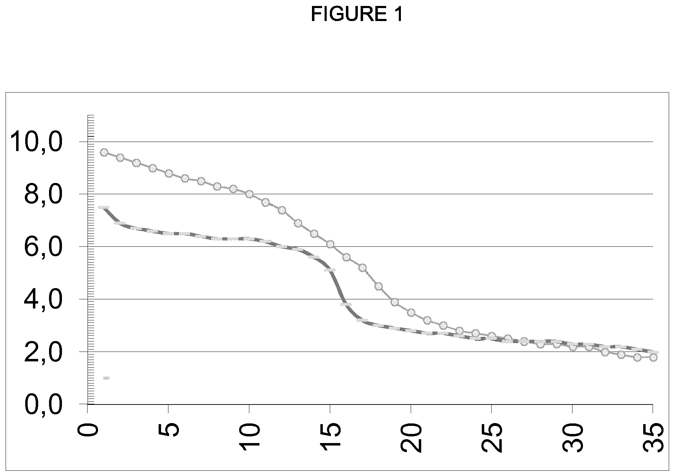

On effectue un dosage pH-métrique de l'émulsifiant par une solution d'acide chlrorhydrique à une concentration de mol.L-1 (pH = 1).
Le tracé de la courbe pH = f(VHCl) permet de mesurer le pKa, constante d'acidité des émulsifiants se déprotonant en fonction du pH.
Solution titrante : acide chlorhydrique HCl à mol.L-1
Solution de titration : 0,200 g d'émulsifiant dans 150 mL d'eau distillée ou déminéralisée. Les courbes sont reportées sur la figure 1 avec en asbcisse le volume d'HCl ajouté en mL et en ordonnée le pH.
La courbe supérieure (ronds, trait fin) correspond à l'émulsifiant 1 de la formule F5. La courbe inférieure (trait épais) correspond à l'émulsifiant 2 de la formule F5.

### Exemple 3 : impact de la nature de l'additif minéral

L'émulsion F5 de l'exemple 1 (11,3 ppc/granulats secs) est mélangée avec des granulats (0/6 Microdiorite (Carrière ambazac)), 0,07 pcc/granulats secs de fibres (polyacrylonitrile de taille comprise entre 4 et 12 mm), 10 pcc/granulats secs d'eau et du ciment ou de la chaux éteinte Ca(OH)₂ (teneur exprimée en pcc/granulats secs). Les temps de maniabilité, de rupture et de fracture des matériaux bitumineux coulés à froid obtenus sont mesurés et reportés dans le tableau suivant :

**Tableau 3**

| Additif minéral | temps de maniabilité (s) | temps de rupture (min) | temps de fracture (s) |
|---|---|---|---|
| Ciment (0,5 ppc) | 170 | 10 | 28 |
| Chaux de Boran (0.25 ppc) | 2 | - | - |

On constate que seul le ciment permet un temps de maniabilité suffisant. Avec la chaux, le temps de maniabilité n'est pas suffisant pour obtenir un matériau bitumineux coulable à froid.

### Exemple 4 : remontée de pH

On simule la remontée de pH d'un enrobé bitumineux coulé à froid en mesurant l'évolution du pH d'une solution comprenant :
- 20 g de filler < 63 um
- 18 g eau déminéralisée
- 11 g d'eau acidifiée à pH = 2 (avec de l'acide HCl ou H3PO4)
- g d'additif minéral (0.5 ppc/ filler sec)
Les résultats obtenus sont reportés dans le tableau suivant :

**Tableau 4**

| **temps (minutes)** | **HCl/ Chaux** | **H₃PO₄/ Chaux** | **HCl/ Ciment** | **H₃PO₄/ Ciment** |
|---|---|---|---|---|
| 0 | 11,6 | 11,3 | 6,7 | 6,1 |
| 0,2 | 12,3 | 11,9 | 7,7 | 6,1 |
| 0,3 | 12,3 | 12 | 7,8 | 6,2 |
| 0,5 | 12,3 | 12 | 8 | 6,2 |
| 0,7 | 12,3 | 12 | 8,1 | 6,3 |
| 0,8 | 12,3 | 12,1 | 8,2 | 6,3 |
| 1 | 12,3 | 12,1 | 8,3 | 6,4 |
| 2 | 12,4 | 12,1 | 8,6 | 6,5 |
| 5 | 12,4 | 12,2 | 9,6 | 6,7 |
| 10 | 12,4 | 12,2 | 10,4 | 7,1 |
| 20 | 12,4 | 12,2 | 10,9 | 7,6 |
| 30 | 12,4 | 12,2 | 11,2 | 7,7 |
| 60 | 12,4 | 12,2 | 11,3 | 7,9 |
| 80 | 12,4 | 12,2 | 11,3 | 8 |

On constate qu'en présence d'acide chlorhydrique la remontée de pH est très importante. Ce qui signifie qu'avec ce système le temps de malaxage de l'émulsion avec la fraction minérale solide sera très court, inférieur à 5s.

### Exemple 5 : étude comparative

Les émulsions F1 et F5 de l'exemple 1 sont mélangées avec des granulats (matériaux de la carrière thiviers) et formulées tel que reporté dans le tableau suivant, dans lequel les teneurs sont toutes exprimées en ppc/granulats secs :

**Tableau 5**

| Référence Emulsion | F1 | F5 |
|---|---|---|
| Teneur en eau | 10 | 10 |
| Fibres | 0,07 | 0,07 |
| Emulsion | 11,3 | 11,3 |
| Ciment CEM II 32.5 | 0,5 | 0,5 |

Les propriétés mécaniques des matériaux bitumineux coulés à froids ainsi obtenus sont reportées dans le tableau suivant :

**Tableau 6**

| | Avec émulsion F5 | Avec émulsion F1 | Spécifications |
|---|---|---|---|
| temps de maniabilité | 100 s | 100 s | > 90 s |
| temps de rupture | 5 min | 5 min | < 20 min. |
| temps de cohésion (≥ 20 kg.cm) | 15 min. | 15 min. | < 30 min. |
| temps de fracture | 37 s | 35 s | - |
| WTAT 18°C 55% HR | 1 % | 1 % | < 5 % |
| WTAT 18°C 100 % HR | 5 % | 3 % | < 25 % |

On constate que les matériaux bitumineux coulés à froids selon l'invention (F5), avec un bitume paraffinique, sont aussi bons que ceux de l'art antérieur avec un bitume naphténique (F1).
Ces bons résultats ont été confirmés lors de la mise sur chantier.

## Revendications

1. Matériau bitumineux coulé à froid, obtenu par mélange d'une fraction minérale solide avec une émulsion cationique de bitume, le bitume étant un bitume paraffinique ou un liant de synthèse ayant un indice d'acide nul avant toute éventuelle additivation, de type liant dans l'eau, **caractérisé en ce qu'**il présente une bonne montée en cohésion selon les spécifications suivantes :
- une valeur de cohésion torsion, mesurée selon l'essai cohésion Bénédict supérieure ou égale à 20 kg/cm à 30 min,
- un temps de fracture au moins aussi bon que celui obtenu avec un bitume naphténique,
- une perte de masse, mesurée selon l'essai WTAT après un temps de mûrissement de 18 h à 18°C et un degré d'hygrométrie de 55 %, inférieure à 5 %,
- une perte de masse, mesurée selon l'essai WTAT après un temps de mûrissement de 18 h à 18°C et un degré d'hygrométrie de 100 %, inférieure à 25 %.

2. Matériau bitumineux coulé à froid selon la revendication 1, **caractérisé en ce qu'**il présente un temps de fracture supérieur à 20 s, avantageusement supérieur 30 s.

3. Matériau bitumineux coulé à froid selon la revendication 1 ou 2, **caractérisé en ce qu'**il présente en outre les spécifications suivantes
- Temps de maniabilité supérieur ou égale à 30 s
- Temps de rupture inférieur ou égale à 20 min.

4. Matériau selon l'une quelconque des revendications précédentes, **caractérisé en ce que** ladite émulsion cationique de bitume est obtenue par mélange d'une formule comprenant, en poids par rapport au poids total de l'émulsion :
- de 50 % à 70 % d'un liant bitumineux naturel paraffinique ou de synthèse, ce liant est dopé par un acide gras ;
- de 30 à 50 % d'une phase aqueuse contenant :
i.de 0,4 % à 2 %, en poids par rapport au poids total de l'emulsion, d'une composition émulsifiante comprenant (1) au moins une alkylpropylènepolyamine, le groupe alkyle étant un reste hydrocarboné, saturé ou insaturé, comprenant de 8 à 24 atomes de carbone et/ou ses dérivés immédiats de cyclisation ainsi que ses dérivés oxyéthylés ou oxypropylés,
ii. d'une quantité suffisante pour ajuster le pH de la phase aqueuse à une valeur comprise entre 1,5 et 5,5, avantageusement entre 2 et 3,5 d'un acide phosphorique ou polyphosphorique,
iii.et d'eau pour complément de la formule à 100 %, **et en ce que** on ajoute à la fraction minérale solide un additif minéral.

5. Matériau selon la revendication 4, **caractérisé en ce que** la composition émulsifiante comprend en outre (2) au moins un amidopolyamine de formule R'CO-(NH-R")ₐ-NH₂, R' étant un reste hydrocarboné, saturé ou insaturé, linéaire ou ramifié, comprenant de 16 à 24 atomes de carbone, R" un radical éthylène, a un entier allant de 2 à 5 et/ou ses dérivés immédiats de cyclisation.

6. Matériau selon l'une quelconque des revendications 4 à 5, **caractérisé en ce que** le dope d'acide gras est choisi dans le groupe constitué par les acides gras et les dérivés d'acides gras.

7. Matériau selon l'une quelconque des revendications 4 à 6, **caractérisé en ce que** l'alkylpropylènepolyamine répond à la formule (I) suivante :
R-(NR₄-R₃)ₓ-NR₁R₂
dans laquelle
x est un entier allant de 1 à 4, avantageusement x vaut 1.
R représente un radical hydrocarboné comprenant de 8 à 24 atomes de carbone, plus avantageusement 12 à 22 atomes de carbone, saturé ou insaturé, linéaire ou ramifié, éventuellement cyclisé.
R₃ représente un radical hydrocarboné comprenant de 1 à 6 atomes de carbone, saturé ou insaturé, linéaire ou ramifié, avantageusement R₃ représente un radical éthylène ou propylène.
R₄ représente un atome d'hydrogène, un radical hydrocarboné comprenant de 1 à 6 atomes de carbone, saturé ou insaturé, linéaire ou ramifié, ou un radical (CH₂-CR₅HO)₂H dans lequel R₅ est un atome d'hydrogène ou un radical méthyle, z vaut 1 ou 2 ; avantageusement R₄ représente un radical méthyle ou éthyle.
R₁ et R₂ représentent, chacun, indépendamment l'un de l'autre, un atome d'hydrogène, un radical hydrocarboné comprenant de 1 à 6 atomes de carbone, saturé ou insaturé, linéaire ou ramifié ou un radical (CH₂-CR₅HO)_{z}H dans lequel R₅ est un atome d'hydrogène ou un radical méthyle, z vaut 1 ou 2 ; avantageusement R₁ représente un radical méthyle ou éthyle ; avantageusement R₂ représente un radical méthyle ou éthyle.

8. Matériau selon l'une quelconque des revendications 4 à 7, **caractérisé en ce que** l'alkylpropylènepolyamine est la suif trimèthylpropylène diamine.

9. Matériau selon l'une quelconque des revendications 5 à 8, **caractérisé en ce que** l'amidopolyamine est le ou les produits de réaction du Tall Oil avec la tétraéthylènpentamine, en particulier la tall oil imidazoline triéthylènetriamine.

10. Matériau selon l'une quelconque des revendications 4 à 9, **caractérisé en ce que** la composition émulsifiante comprend en outre (3) une amine grasse de formule (III) R-NR₁R_{2 ;} R, R₁ et R₂ étant tels que définis pour l'alkylpropylènepolyamine de formule (1) ; avantageusement l'amine grasse est la suif diméthylamine.

11. Matériau selon l'une quelconque des revendications 5 à 10, **caractérisé en ce que** la composition émulsifiante comprend, par rapport au poids total de la composition émulsifiante, (a) de 30 à 70 % en poids de l'alkylpropylènepolyamine (1) et éventuellement de l'amine grasse (3) et (b) de 30 à 70 % en poids de l'amidopolyamine (2).

12. Matériau selon l'une quelconque des revendications 4 à 11, **caractérisé en ce qu'**on ajoute à la fraction minérale solide des fibres.

13. Utilisation du matériau selon l'une quelconque des revendications 1 à 12, pour la fabrication de couches de roulement, de couche d'accrochage ou de couche de roulement provisoire.

14. Procédé de préparation d'un matériau bitumineux coulé à froid ayant des propriétés de montée en cohésion améliorées, comprenant :
a. La préparation d'une fraction minérale solide.
b. L'ajout, à la fraction minérale solide de l'étape a) ; d'un additif minéral.
c. Le cas échéant, l'ajout à la fraction minérale solide de l'étape b), d'eau d'apport et/ou d'un additif retardateur de prise.
d. L'ajout de l'émulsion telle que définie à l'une quelconque des revendications 4 à 12 à la fraction minérale solide de l'étape b) ou c).

15. Procédé selon la revendication 14, **caractérisé en ce que** l'on ajoute en outre des fibres, en particulier des polyacrylonitriles, lors de l'étape b).

16. Procédé de fabrication de couche de roulement ou couche d'accrochage comprenant
- la préparation d'un matériau bitumineux coulé à froid selon l'une quelconque des revendications 1 à 12 ; puis
- l'épandage du matériau bitumineux à une température ambiante variant de 5°C à 40°C et à un degré d'hygrométrie pouvant aller jusqu'à 100 % ;
- puis remise sous trafic, avantageusement dans l'heure, plus avantageusement dans la demi-heure, après l'épandage.

17. Utilisation combinée dans un matériau bitumineux coulé à froid préparé à partir d'un liant bitumineux paraffinique ou un liant de synthèse ayant un indice d'acide nul avant toute éventuelle additivation (a) d'une composition émulsifiante telle que définie à l'une quelconque des revendications 4 à 12, (b) d'un dope d'acide gras, et d'additif minéral ajouté à la fraction minérale solide, pour améliorer la montée en cohésion dudit matériau bitumineux coulé à froid.

## Patentansprüche

1. Bitumenhaltiges Kaltbau-Material, das durch Mischen einer festen mineralischen Fraktion mit einer kationischen Bitumenemulsion erhalten wird, wobei es sich bei dem Bitumen um ein paraffinhaltiges Bitumen oder ein synthetisches Bindemittel vom Typ eines Bindemittels in Wasser handelt, das vor jeder eventuellen Additivierung eine Säurezahl von Null aufweist, **dadurch gekennzeichnet, dass** es einen guten Kohäsionsaufbau gemäß den folgenden Spezifikationen aufweist:
- einen Torsionskohäsionswert, gemessen nach dem Benedict-Kohäsionstest, von größer oder gleich 20 kg/cm nach 30 Min.,
- eine Bruchzeit, die mindestens ebenso gut ist wie jene, die mit einem naphthenhaltigen Bitumen erhalten wird,
- einen Masseverlust, gemessen nach dem WTAT-Test nach einer Reifezeit von 18 Std. bei 18 °C und einem Feuchtegrad von 55 %, von kleiner als 5 %,
- einen Masseverlust, gemessen nach dem WTAT-Test nach einer Reifezeit von 18 Std. bei 18 °C und einem Feuchtegrad von 100 %, von kleiner als 25 %.

2. Bitumenhaltiges Kaltbau-Material nach Anspruch 1, **dadurch gekennzeichnet, dass** es eine Bruchzeit von größer als 20 s, vorteilhafterweise größer als 30 s aufweist.

3. Bitumenhaltiges Kaltbau-Material nach Anspruch 1 oder 2, **dadurch gekennzeichnet, dass** es weiter die folgenden Spezifikationen aufweist
- Verarbeitbarkeitszeit von größer oder gleich 30 s,
- Brechzeit von kleiner oder gleich 20 Min.

4. Material nach einem der vorstehenden Ansprüche, **dadurch gekennzeichnet, dass** die kationische Bitumenemulsion durch Mischen einer Formel erhalten wird, die, in Gewicht auf das Gesamtgewicht der Emulsion bezogen, umfasst:
- 50 % bis 70 % eines natürlichen paraffinhaltigen oder synthetischen bitumenhaltigen Bindemittels, wobei dieses Bindemittel mit einer Fettsäure dotiert ist;
- 30 bis 50 % einer wässrigen Phase, welche enthält:
i. auf das Gesamtgewicht der Emulsion bezogen, 0,4 Gewichts-% bis 2 Gewichts-% einer emulgierenden Zusammensetzung, die (1) mindestens ein Alkylpropylenpolyamin umfasst, wobei es sich bei der Alkylgruppe um einen gesättigten oder ungesättigten Kohlenwasserstoffrest mit 8 bis 24 Kohlenstoffatomen und/oder seine unmittelbaren Cyclisierungsderivate sowie seine oxyethylierten oder oxypropylierten Derivate handelt,
ii. eine Menge einer Phosphor- oder Polyphosphorsäure, die ausreicht, um den pH-Wert der wässrigen Phase auf einen Wert im Bereich zwischen 1,5 und 5,5, vorteilhafterweise zwischen 2 und 3,5 einzustellen,
iii.und Wasser, um die Formel auf 100 % zu ergänzen,
**und dadurch, dass** der festen mineralischen Fraktion ein mineralischer Zusatzstoff zugegeben wird.

5. Material nach Anspruch 4, **dadurch gekennzeichnet, dass** die emulgierende Zusammensetzung weiter (2) mindestens ein Amidopolyamin der Formel R'CO-(NH-R")ₐ-NH₂, wobei R' ein gesättigter oder ungesättigter, geradkettiger oder verzweigter Kohlenwasserstoffrest mit 16 bis 24 Kohlenstoffatomen, R" ein Ethylenrest, a eine ganze Zahl von 2 bis 5 ist, und/oder seine unmittelbaren Cyclisierungsderivate umfasst.

6. Material nach einem der Ansprüche 4 bis 5, **dadurch gekennzeichnet, dass** die Fettsäuredotierung ausgewählt ist aus der Gruppe bestehend aus den Fettsäuren und den Fettsäurederivaten.

7. Material nach einem der Ansprüche 4 bis 6, **dadurch gekennzeichnet, dass** das Alkylpropylenpolyamin der folgenden Formel (I) entspricht:
R-(NR₄-R₃)ₓ-NR₁R₂
wobei
x eine ganze Zahl von 1 bis 4 ist, vorteilhafterweise x gleich 1 ist.
R für einen gesättigten oder ungesättigten, geradkettigen oder verzweigten, gegebenenfalls cyclisierten Kohlenwasserstoffrest mit 8 bis 24 Kohlenstoffatomen, vorteilhafter 12 bis 22 Kohlenstoffatomen steht.
R₃ für einen gesättigten oder ungesättigten, geradkettigen oder verzweigten Kohlenwasserstoffrest mit 1 bis 6 Kohlenstoffatomen steht, vorteilhafterweise R₃ für einen Ethylen- oder Propylenrest steht.
R₄ für ein Kohlenwasserstoffatom, einen gesättigten oder ungesättigten, geradkettigen oder verzweigten Kohlenwasserstoffrest mit 1 bis 6 Kohlenstoffatomen, oder einen (CH₂-CR₅HO)_{z}H-Rest steht, wobei R₅ ein Wasserstoffatom oder ein Methylrest ist, z gleich 1 oder 2 ist; vorteilhafterweise R₄ für einen Methyl- oder Ethylrest steht.
R₁ und R₂ jeweils unabhängig voneinander für ein Wasserstoffatom, einen gesättigten oder ungesättigten, geradkettigen oder verzweigten Kohlenwasserstoffrest mit 1 bis 6 Kohlenstoffatomen, oder einen (CH₂-CR₅HO)_{z}H-Rest stehen, wobei R₅ ein Wasserstoffatom oder ein Methylrest ist, z gleich 1 oder 2 ist; vorteilhafterweise R₁ für einen Methyl- oder Ethylrest steht; vorteilhafterweise R₂ für einen Methyl- oder Ethylrest steht.

8. Material nach einem der Ansprüche 4 bis 7, **dadurch gekennzeichnet, dass** es sich beim Alkylpropylenpolyamin um Trimethylpropylendiamintalg handelt.

9. Material nach einem der Ansprüche 5 bis 8, **dadurch gekennzeichnet, dass** es sich beim Amidopolyamin um das oder die Reaktionsprodukt(e) von Tallöl mit Tetraethylenpentamin, insbesondere um Imidazolintriethylentriamintallöl handelt.

10. Material nach einem der Ansprüche 4 bis 9, **dadurch gekennzeichnet, dass** die emulgierende Zusammensetzung weiter (3) ein Fettamin der Formel (III) R-NR₁R₂ umfasst; wobei R, R₁ und R₂ so sind wie für das Alkylpropylenpolyamin der Formel (I) definiert; vorteilhafterweise das Fettamin Dimethylamintalg ist.

11. Material nach einem der Ansprüche 5 bis 10, **dadurch gekennzeichnet, dass** die emulgierende Zusammensetzung, auf das Gesamtgewicht der emulgierenden Zusammensetzung bezogen, (a) 30 bis 70 Gewichts-% des Alkylpropylenpolyamins (1) und gegebenenfalls des Fettamins (3), und (b) 30 bis 70 Gewichts-% des Amidopolyamins (2) umfasst.

12. Material nach einem der Ansprüche 4 bis 11, **dadurch gekennzeichnet, dass** der festen mineralischen Fraktion Fasern zugegeben werden.

13. Verwendung des Materials nach einem der Ansprüche 1 bis 12 für den Bau von Deckschichten, Haftschichten oder provisorischen Deckschichten.

14. Verfahren zur Herstellung eines bitumenhaltigen Kaltbau-Materials mit verbesserten Kohäsionsaufbaueigenschaften, umfassend:
a. Das Herstellen einer festen mineralischen Fraktion.
b. Das Zugeben eines mineralischen Zusatzstoffs zu der festen mineralischen Fraktion aus dem Schritt a).
c. Gegebenenfalls das Zugeben von Zusatzwasser und/oder eines abbindeverzögernden Zusatzstoffs zu der festen mineralischen Fraktion aus dem Schritt b).
d. Das Zugeben der Emulsion, so wie in einem der Ansprüche 4 bis 12 definiert, zu der festen mineralischen Fraktion aus dem Schritt b) oder c).

15. Verfahren nach Anspruch 14, **dadurch gekennzeichnet, dass** beim Schritt b) weiter Fasern, insbesondere Polyacrylonitrile, zugegeben werden.

16. Verfahren zum Bau einer Deckschicht oder Haftschicht, umfassend
- das Herstellen eines bitumenhaltigen Kaltbau-Materials nach einem der Ansprüche 1 bis 12; anschließend
- den Einbau des bitumenhaltigen Materials bei einer variierenden Umgebungstemperatur von 5 °C bis 40 °C und bei einem Feuchtegrad, der bis 100 % gehen kann;
- anschließend Freigabe für den Verkehr, vorteilhafterweise binnen einer Stunde, vorteilhafter binnen einer halben Stunde nach dem Einbau.

17. Kombinierte Verwendung (a) einer emulgierenden Zusammensetzung, so wie in einem der Ansprüche 4 bis 12 definiert, (b) einer Fettsäuredotierung, und eines mineralischen Zusatzstoffs, der der festen mineralischen Fraktion zugegeben wird, in einem bitumenhaltigen Kaltbau-Material, das auf Grundlage eines paraffinhaltigen bitumenhaltigen Bindemittels oder eines synthetischen Bindemittels hergestellt wird, welches vor jeder eventuellen Additivierung eine Säurezahl von Null aufweist, um den Kohäsionsaufbau des bitumenhaltigen Kaltbau-Materials zu verbessern.

## Claims

1. A cold-micro asphalt concrete surfacing, obtained by mixing a solid mineral fraction with a cationic bitumen emulsion, the bitumen being a paraffinic bitumen or a synthetic binder naturally having an acid index of zero before any addition of additive, of the binder type in water, **characterized in that** it has a good rise in cohesion according to the following specifications:
- a torsional cohesion value, as measured according to the Benedict cohesion test, greater than or equal to 20 kg/cm at 30 min,
- a fracture time at least as good as the one obtained with naphthenic bitumen,
- a mass loss of less than 5%, as measured according to the WTAT test after a ripening time of 18 h at 18°C and a hygrometry level of 55%,
- a mass loss of less than 25%, as measured according to the WTAT test after a ripening time of 18 h at 18°C and a hygrometry level of 100%.

2. The cold-micro asphalt concrete surfacing material according to claim 1, **characterized in that** it has a fracture time greater than 20 s, advantageously greater than 30 s.

3. The cold-micro asphalt concrete surfacing according to claim 1 or 2, **characterized in that** it further has the following specifications
- workability time greater than or equal to 30s
- breakage time of less than or equal to 20 min.

4. The micro-surfacing according to any one of the preceding claims, **characterized in that** said cationic bitumen emulsion is obtained by mixing a formula comprising, by weight based on the total weight of the emulsion:
- from 50% to 70% of a natural paraffinic or synthetic bituminous binder, this binder being doped with a fatty acid;
- from 30 to 50% of an aqueous phase containing:
i. from 0.4% to 2%, by weight based on the total weight of the emulsion, of an emulsifying composition comprising (1) at least one alkylpropylenepolyamine, the alkyl group being a saturated or unsaturated hydrocarbon radical, comprising from 8 to 24 carbon atoms and/or its immediate cyclization derivatives as well as its oxyethylated or oxypropylated derivatives,
ii. a sufficient amount of a phosphoric or polyphosphoric acid for adjusting the pH of the aqueous phase to a value comprised between 1.5 and 5.5, advantageously between 2 and 3.5,
iii. and water for balancing the formula to 100%,
and **in that** a mineral additive is added to the solid mineral fraction.

5. The micro-surfacing according to claim 4, **characterized in that** the emulsifying composition further comprises (2) at least one amidopolyamine of formula R'CO-(NH-R")ₐ-NH₂, R' being a saturated or unsaturated, linear or branched hydrocarbon radical comprising from 16 to 24 carbon atoms, R" being an ethylene radical, a is an integer ranging from 2 to 5 and/or its immediate cyclization derivatives.

6. The micro-surfacing according to any one of claims 4 to 5, **characterized in that** the fatty acid dope is selected from the group formed by fatty acids and derivatives of fatty acids.

7. The micro-surfacing according to any one of claims 4 to 6, **characterized in that** the alkylpropylenepolyamine fits the following formula (I):
R-(NR₄-R₃)ₓ-NR₁R₂
wherein
x an integer ranging from 1 to 4, advantageously x has the value 1,
R represents an either saturated or unsaturated, either linear or branched, optionally cyclized, hydrocarbon radical comprising from 8 to 24 carbon atoms, more advantageously 12 to 22 carbon atoms,
R₃ represents an either saturated or unsaturated, either linear or branched, hydrocarbon radical comprising from 1 to 6 carbon atoms, advantageously R₃ represents an ethylene or propylene radical,
R₄ represents a hydrogen atom, an either saturated or unsaturated, either linear or branched, hydrocarbon radical comprising from 1 to 6 carbon atoms, or a (CH₂-CR₅HO)_{z}H radical wherein R₅ is a hydrogen atom or a methyl radical, z has the value 1 or 2; advantageously R₄ represents a methyl or ethyl radical.
R₁ and R₂ each represent independently of each other, a hydrogen atom, an either saturated or unsaturated, either linear or branched, hydrocarbon radical comprising from 1 to 6 carbon atoms, or a (CH₂-CR₅HO)_{z}H radical wherein R₅ is a hydrogen atom or a methyl radical, z has the value 1 or 2; advantageously R₁ represents a methyl or ethyl radical; advantageously R₂ represents a methyl or ethyl radical.

8. The micro-surfacing according to any one of claims 4 to 7, **characterized in that** the alkylpropylenepolyamine is tallow trimethylpropylene diamine.

9. The micro-surfacing according to any one of claims 5 to 8, **characterized in that** the amidopolyamine is the reaction product(s) of tall oil with tetraethylenepentamine, in particular tall oil imidazoline triethylenetriamine.

10. The micro-surfacing according to any one of claims 4 to 9, **characterized in that** the emulsifying composition further comprises (3) a fatty amine of formula (III) R-NR₁R₂; R, R₁ and R₂ being as defined for the alkylpropylenepolyamine of formula (I); advantageously the fatty amine is tallow dimethylamine.

11. The micro-surfacing according to any one of claims 5 to 10, **characterized in that** the emulsifying composition comprises, based on the total weight of the emulsifying composition, (a) from 30 to 70% by weight of the alkylpropylenepolyamine (1) and optionally the fatty amine (3) and (b) from 30 to 70 % by weight of the amidopolyamine (2).

12. The micro-surfacing according to any one of claims 4 to 11, **characterized in that** fibers are added to the solid mineral fraction.

13. The use of the micro-surfacing according to any one of claims 1 to 12, for manufacturing roadway layers, adhesion layers and temporary roadway layers.

14. A method for preparing a cold-micro asphalt concrete surfacing having improved cohesion rise properties, comprising:
a. preparing a solid mineral fraction,
b. adding to the solid mineral fraction of step a), a mineral additive,
c. if necessary, adding to the solid mineral fraction of step b), a water supplement and/or a setting retarding additive,
d. adding the emulsion as defined in any one of claims 4 to 12 to the solid mineral fraction of step b) or c).

15. The method according to claim 14, **characterized in that** fibers are further added, in particular polyacrylonitriles, during step b).

16. A method for manufacturing a roadway layer or an adhesion layer comprising
- preparing a cold-micro asphalt concrete surfacing according to any one of claims 1 to 12; and then
- spreading out the bituminous material at an ambient temperature varying from 5°C to 40°C and at a hygrometry level which may range up to 100%;
- and then opening it to traffic, advantageously within the hour, more advantageously within the half-hour, after spreading.

17. The combined use in a cold-micro asphalt concrete surfacing prepared from a paraffinic bituminous binder (a) or from a synthetic binder naturally having an acid index of zero before any addition of additive of an emulsifying composition as defined in any one of claims 4 to 12, (b) from a fatty acid dope, and from a mineral additive added to the solid mineral fraction, in order to improve rise in cohesion of said cold-micro asphalt concrete surfacing.
